# EUROPÄISCHE PATENTSCHRIFT

(11) **EP 1 413 367 B1**
(45) Veröffentlichungstag und Bekanntmachung des Hinweises auf die Patenterteilung: **14.05.2008**
(21) Anmeldenummer: 03022476.0
(22) Anmeldetag: 08.10.2003
(51) Int. Cl.: B08B 5/04, B25J 9/00, B05B 15/04

(54) **Vorrichtung zur Absaugung bestimmter Flächenbereiche an bepulverten Fahrzeugrädern**
Device for removing powder from certain surface areas of vehicle wheels by suction
Dispositif pour l'élimination de poudre sur certains secteurs de surface de roues de véhicules par aspiration

(30) Priorität: 26.10.2002 DE 10249999
(43) Veröffentlichungstag der Anmeldung: 28.04.2004
(73) Patentinhaber: EISENMANN Anlagenbau GmbH & Co. KG, 71032 Böblingen (DE)
(72) Erfinder: Brosi, Jürgen, 71717 Beilstein (DE)
(74) Vertreter: Ostertag, Ulrich

(56) Entgegenhaltungen:
- EP-A1- 0 382 503
- EP-A1- 0 743 097
- JP-A- 2000 033 331

## Beschreibung

Die Erfindung betrifft eine Vorrichtung zur Absaugung bestimmter Flächenbereiche an bepulverten Fahrzeugrädern.

Fahrzeugräder, insbesondere Leichtmetallräder, werden heute vorwiegend pulverlackiert. Zunächst werden die entsprechend vorbereiteten Räder in einer Bepulverungsstation mit Lackpulver überzogen, das danach in einem Brennofen eingebrannt wird. Dabei läßt es sich im allgemeinen nicht vermeiden, daß während des Bepulverungsvorganges alle Flächen der Fahrzeugräder, die der pulveraufbringenden Applikationseinrichtung zugewandt sind, mit Lackpulver bedeckt werden. Dies ist aber unerwünscht, weil bestimmte Flächen, insbesondere die die Befestigungsbohrungen umgebenden Ringflächen sowie die Fläche der Nabenbohrung, möglichst unlackiert bleiben sollen.

Bisher wurden daher die entsprechenden Flächen in manueller Arbeit von dem Lackpulver befreit. Alternativ wurden die Fahrzeugräder vor dem Eintritt in die Bepulverungsstation entsprechend maskiert, beispielsweise durch Einlegen von Kugeln in die Befestigungsbohrungen der Fahrzeugräder. Dieser Maskierungsvorgang mußte aber ebenso wie die spätere Entfernung der Maske nach der Bepulverung in aufwendiger und daher teurer Handarbeit durchgeführt werden.

Das Dokument JP-2000-033331 offenbart eine Vorrichtung gemäß dem Oberbegriff des Anspruchs 1.

Aufgabe der vorliegenden Erfindung ist es, eine Vorrichtung zu schaffen, mit welcher vollautomatisch nach der Bepulverung der Fahrzeugräder diejenigen Flächenbereiche wieder von Pulver befreit werden können, an denen ein Lack nicht erwünscht ist.

Diese Aufgabe wird erfindungsgemäß dadurch gelöst, daß die Vorrichtung umfasst:
a) ein Fördersystem, welches die Fahrzeugräder entlang eines Bewegungsweges durch die Vorrichtung führt;
b) eine elektronische Kamera, mit deren Hilfe in einer Erfassungsstation die Achs- und Winkellage der Fahrzeugräder erfassbar ist;
c) eine Absaugstation mit einem beweglichen Absaugkopf, der eine Mehrzahl von Saugdüsen umfasst;
d) eine Bewegungseinrichtung, welche in der Lage ist, den Absaugkopf in unterschiedlichen Achsorientierungen und in unterschiedlichen Winkelstellungen um seine Achse an die bepulverte Fläche eines in der Absaugstation befindlichen Fahrzeugrades heranzuführen und in dieser Lage mit der Geschwindigkeit des Fahrzeugrades eine gewisse Strecke zu bewegen;
e) eine Unterdruckquelle, welche mit den Saugdüsen verbunden ist;
f) eine Steuerung, welche die in der Erfassungsstation für die Achs- und Winkelstellung eines bestimmten Fahrzeugrades ermittelten Daten mit einer Zeitverzögerung, die der Durchlaufzeit des Fahrzeugrades zwischen der Erfassungsstation und der Absaugstation entspricht, an die Bewegungseinrichtung des Absaugkopfes weiterleitet und diese veranlasst, den Absaugkopf unter entsprechender Ausrichtung seiner Achse und seiner Winkellage an das Fahrzeugrad heranzuführen und sich mit diesem über eine gewisse Strecke zu bewegen.

Erfindungsgemäß werden also die aus der Bepulverungsstation kommenden Fahrzeugräder kontinuierlich durch eine vollautomatische Vorrichtung geführt, in welcher zunächst mit Hilfe einer elektronischen Kamera die genaue Achsorientierung der einzelnen Räder sowie die Winkelstellung der Räder um ihre Achse bestimmt werden. Die dabei ermittelten Daten werden einer Steuerung zugeführt, die ihrerseits die Bewegung eines Absaugkopfes kontrolliert. Dieser Absaugkopf wird in eine Orientierung und eine Winkellage gebracht, die der zuvor ermittelten Achsorientierung und Winkellage des entsprechenden Fahrzeugrades entspricht. Der Absaugkopf erhält von der Steuerung den Befehl, sich dem Fahrzeugrad anzunähern, mit einer zeitlichen Verzögerung, die der Durchlaufzeit des Fahrzeugrades zwischen der Erfassungsstation und der Absaugstation entspricht. Die Zuordnung zwischen dem jeweiligen Fahrzeugrad und den für dieses erfaßten Daten bleibt dabei nach dem Prinzip "first in - first out" erhalten.

Während des Absaugvorganges bewegt sich der Absaugkopf über eine gewisse Zeit gemeinsam mit dem Fahrzeugrad mit, so daß dieses also nicht angehalten werden muß. Ein manueller Eingriff ist bei der erfindungsgemäßen Vorrichtung zur Beseitigung unerwünschter Lackpulverbereiche nicht erforderlich.

Das Fördersystem, welches die Fahrzeugräder durch die erfindungsgemäße Vorrichtung bewegt, kann mit demjenigen in den vorausgeschalteten und den nachgeschalteten Stationen der Lackieranlage übereinstimmen.

Zweckmäßigerweise ist die Bewegungseinrichtung ein Roboter mit entsprechender Achszahl und ist der Absaugkopf an dem Ende des Roboterarmes befestigt. Hierfür geeignete Roboter sind am Markt erhältlich, brauchen also für die erfindungsgemäße Vorrichtung nicht eigens konstruiert zu werden.

Auf der erfindungsgemäßen Vorrichtung können Fahrzeugräder unterschiedlichen Typs bearbeitet werden, wenn sie eine Mehrzahl von austauschbaren Absaugköpfen, die jeweils den unterschiedlichen Typen von Fahrzeugrädern zugeordnet sind, umfasst.

In diesem Zusammenhang empfiehlt es sich, wenn die elektronische Kamera in der Erfassungsstation auch in der Lage ist, den Typ des Fahrzeugrades zu erkennen und ein entsprechendes Signal an die Steuerung abzugeben.

Besonders vorteilhaft ist, wenn die Absaugköpfe über ein Werkzeugwechselsystem an dem Roboterarm befestigt sind. Derartige Werkzeugwechselsysteme sind bekannt; sie ermöglichen den schnellen Tausch des Absaugkopfes, wenn ein neuer Fahrzeugradtyp bearbeitet werden soll.

Für jeden Absaugkopf kann eine Abstellfläche vorgesehen sein, die im Erfassungsbereich des Roboterarmes liegt. Der Wechsel des Absaugkopfes kann dann ebenfalls vollautomatisch dadurch durchgeführt werden, daß der Roboterarm sich zu einer der Abstellflächen bewegt, dort den bisher benutzten Absaugkopf absetzt, sich sodann zu einer anderen Abstellfläche bewegt und dort den zur weiteren Bearbeitung benötigten Absaugkopf aufnimmt.

Die Fördereinrichtung kann einen Kettenförderer umfassen. Dies ist deshalb günstig, weil im allgemeinen Kettenförderer auch in der der erfindungsgemäßen Vorrichtung vorgeschalteten Bepulverungsstation und in der der erfindungsgemäßen Vorrichtung nachgeschalteten Station Verwendung finden, so daß durch all diese Stationen eine einheitliche Fördereinrichtung verlaufen kann.

Zweckmäßigerweise sind die Fahrzeugräder auf Spindeln aufgesetzt, die an der Fördereinrichtung befestigt und um ihre eigene Achse drehbar sind. Die Vorteile dieser Drehbarkeit kommen allerdings im allgemeinen der der erfindungsgemäßen Vorrichtung vorgeschalteten Bepulverungsstation zugute, wo durch die Drehbarkeit der Fahrzeugräder die Applikation des Lackpulvers erleichtert wird.

Die herkömmlichen Fördereinrichtungen in Lackieranlagen, die nach dem oben Gesagten vorzugsweise auch durch die erfindungsgemäße Vorrichtung hindurchgeführt sein sollen, müssen verhältnismäßig robust ausgeführt sein. Sie weisen daher zuweilen ein gewisses Spiel auf. In diesem Falle empfiehlt sich eine Ausführungsform der Erfindung, bei welcher neben der Fördereinrichtung eine Gleichlaufeinrichtung an der Wegstrecke zwischen der Erfassungsstation und der Absaugstation vorgesehen ist, welche ein eventuelles Spiel der Fördereinrichtung aufnimmt und für eine exakt definierte Geschwindigkeit der Fahrzeugräder sorgt. Auf diese Weise wird vermieden, daß die Position der Fahrzeugräder in der Absaugstation von derjenigen Position abweicht, die nach den in der Erfassungsstation ermittelten Daten errechnet wurde.

Die Gleichlaufeinrichtung kann beispielsweise zwei Endlosbänder umfassen, deren Trums sich parallel zum Bewegungsweg der Fahrzeugräder erstrecken, wobei die Spindeln zwischen den inneren Trums eingeklemmt sind.

Aus Sicherheitsgründen ist es vorteilhaft, wenn die Saugdüsen an einer Düseneinheit ausgebildet sind, welche innerhalb des Absaugkopfes beweglich angeordnet ist und von einer Federeinrichtung in eine Position gedrückt wird, in welcher die Saugdüsen maximal über den Absaugkopf überstehen. Bei einem nicht ganz exakten Heranführen des Absaugkopfes an das Fahrzeugrad federt daher die Düseneinrichtung zurück, so daß Beschädigungen an dem Absaugkopf oder dem Fahrzeugrad vermieden werden können.

Dabei kann ein Sensor vorgesehen sein, welcher ein Alarmsignal an die Steuerung abgibt, wenn die Düseneinheit weiter als eine vorgegebene Strecke gegen die Kraft der Federeinrichtung bewegt wird. Auf dieses Alarmsignal hin zieht die Steuerung den Absaugkopf von dem Fahrzeugrad weg. Die Vorrichtung kann angehalten und das Bedienpersonal auf den vorliegenden Fehler aufmerksam gemacht werden.

Der Absaugkopf kann eine Mehrzahl von Saugdüsen aufweisen, die in gleichem radialen Abstand von der Achse des Absaugkopfes angeordnet sind und der Absaugung der die Mündungen der Befestigungsbohrungen des Fahrzeugrades umgebenden Ringflächen dienen.

Zusätzlich kann der Absaugkopf eine zu seiner Achse koaxiale Ringdüse aufweisen, welche der Absaugung der Flächen des Fahrzeugrades dient.

Als Unterdruckquelle empfiehlt sich ein Industriestaubsauger, der kommerziell erhältlich und verhältnismäßig preiswert ist.

Bei einer besonders bevorzugten Ausführungsform der Erfindung weisen die Spindeln jeweils einen Spindelkopf mit einem Zentrierkegel auf, wobei der Zentrierkegel einen in einer Bohrung des Spindelkopfes verschiebbar geführten und von einer Federeinrichtung beaufschlagten kolbenartigen Abschnitt und einen durch eine Bohrung an der Oberseite des Spindelkopfes hindurchgeführten, überstehenden kegeligen Abschnitt aufweist, der bei der Annäherung des Absaugkopfes an das Fahrzeugrad mit einem Teil des Absaugkopfes in Berührung gelangt, wodurch der Zentrierkegel in der Bohrung des Spindelkopfes gegen die Kraft der Federeinrichtung zurückgeschoben und ein Spalt zwischen dem kegeligen Abschnitt des Zentrierkegels und der Bohrung in der Oberseite des Spindelkopfes freigegeben wird.

Der Zentrierkegel dient zunächst, wie sein Name sagt, der Zentrierung des Absaugkopfes bei der Annäherung an das Fahrzeugrad. Zum anderen eröffnet das Zurückschieben des Zentrierkegels einen Strömungweg, durch welchen Luft bei der Absaugung der Nabenbohrung des Fahrzeugrades fließen und so den Absaugvorgang unterstützen kann.

Ein Ausführungsbeispiel der Erfindung wird nachfolgend anhand der Zeichnung näher erläutert; es zeigen
- Figur 1:: in Seitenansicht eine Vorrichtung zum Absaugen bepulverter Aluminiumräder;
- Figur 2:: die Draufsicht auf die Vorrichtung von Figur 1;
- Figur 3:: eine Ausschnittvergrößerung im Bereich der Absaugstation der Vorrichtung von Figur 1, teilweise im Schnitt.

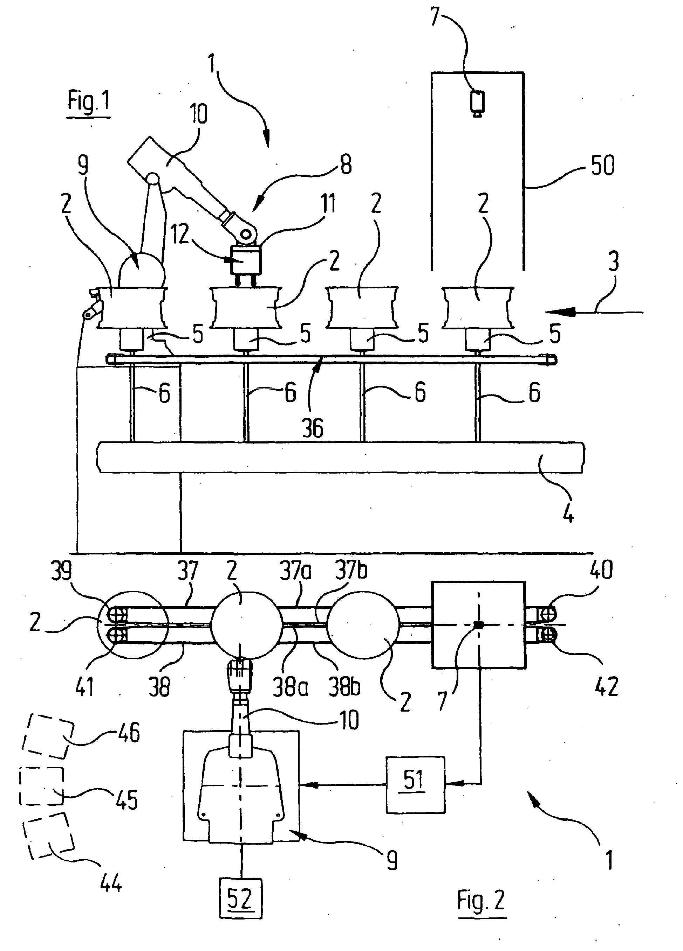

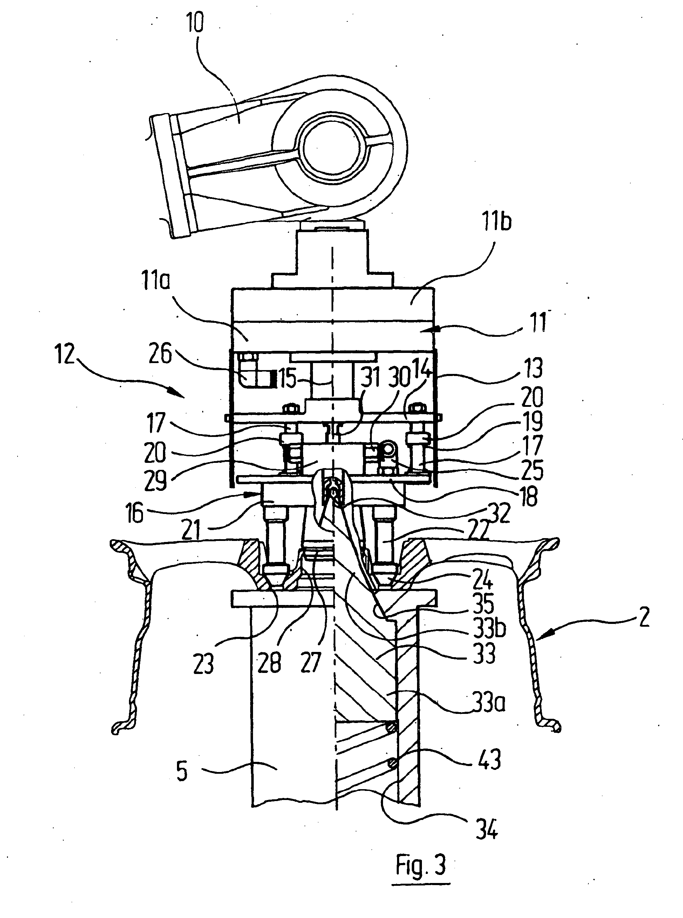

Die in den Figuren 1 und 2 dargestellte, insgesamt mit dem Bezugszeichen 1 gekennzeichnete Vorrichtung dient dazu, Aluminiumräder 2, die in einer Bepulverungsstation zuvor mit Lackpulver beschichtet wurden, in denjenigen Bereichen automatisch abzusaugen, in denen ein Lackauftrag nicht erwünscht ist. Bei diesen Bereichen handelt es sich insbesondere um sich konisch erweiternde Endbereiche der Befestigungsbohrungen 23 sowie um den Bereich der Nabenbohrung 28 (vgl. Figur 3). Die Aluminiumräder 2 werden der Absaugvorrichtung 1 im Sinne des Pfeiles 3 in Figur 1 von der nicht dargestellten Bepulverungsstation mit Hilfe eines schematisch angedeuteten Kettenförderers 4 zugeführt und im Normalbetrieb mit kontinuierlicher Geschwindigkeit hindurchtransportiert. Die Aluminiumräder 2 liegen dabei in einer in Figur 3 dargestellten Weise auf der Oberseite eines Spindelkopfes 5 auf, der von einer vertikal verlaufenden, um ihre eigene Achse drehbaren Spindel 6 getragen ist. Die Spindel 6 ihrerseits ist an dem Kettenförderer 4 festgelegt. Wie Figur 1 zeigt, folgen mehrere Aluminiumräder 2 tragende Spindeln 6 mit zugehörigen Spindelköpfen 5 in regelmäßigen Abständen aufeinander.

Die in Richtung des Pfeiles 3 zugeführten Aluminiumräder 2 gelangen zunächst in eine Erfassungsstation 50 und dort in das Blickfeld einer CCD-Kamera 7. Diese erfasst den Typ des unter ihr vorbeiwandernden Aluminiumrades 2 und stellt die genaue Achsorientierung und Winkellage dieses Aluminiumrades 2 fest.

Die Aluminiumräder 2 wandern, von dem Kettenförderer 4 bewegt, weiter zu einer Absaugstation, die in der Zeichnung insgesamt mit dem Bezugszeichen 8 gekennzeichnet ist. Die Absaugstation 8 umfasst einen Roboter 9, der, wie Figur 2 zeigt, neben dem Bewegungsweg der Aluminiumräder 2 auf dem Raumboden aufgestellt ist und einen Roboterarm 10 besitzt. Das Ende des Roboterarmes 10 trägt ein Werkzeugwechselsystem 11. Dessen Bauweise stimmt mit üblichen, bei Werkzeugmaschinen eingesetzten Werkzeugwechselsystemen überein, die einen schnellen Werkzeugwechsel gestatten und hierzu geeignete Kupplungsvorrichtungen aufweisen. Zu diesen Kupplungsvorrichtungen gehören im vorliegenden Falle auch Kupplungen für eine Vakuumleitung, wie weiter unten deutlich wird. Diese Vakuumleitung verläuft durch den Roboterarm 10 und führt zu einem in der Figur 2 dargestellten Industriestaubsauger 52, der als Vakuumquelle und als Auffangfilter für das von den Aluminiumrädern 2 abgesaugte Pulver dient.

Die Absaugstation 8 umfasst ferner einen Absaugkopf 12, der mit Hilfe des Werkzeugwechselsystemes 11 am Ende des Roboterarmes 10 angebracht und in Figur 3 in größerem Maßstabe und teilweise geschnitten dargestellt ist.

Der Absaugkopf 12 besitzt ein zylindrisches Gehäuse 13, das mit einer das Gehäuse 13 etwa in halber Höhe durchsetzenden kreisrunden Tragplatte 14 verbunden ist. Diese ist über eine starre Stange 15 an dem abnehmbaren Teil 11a des Werkzeugwechselsystemes 11 befestigt. Die Tragplatte 14 macht also alle Bewegungen des Werkzeugwechselsystemes 11 mit.

An der Tragplatte 14 ist eine Düseneinheit 16 mittels dreier achsparallel verlaufender, gegeneinander um 120° winkelversetzter Führungssäulen 17 abgehängt, von denen in Figur 3 zwei erkennbar sind. Die Düseneinheit 16 besitzt hierzu eine parallel zu der Tragplatte 14 verlaufende Platte 18, die Bohrungen aufweist, durch welche die Führungssäulen 17 hindurch verlaufen. Mit Hilfe von Federn 19, welche einen Bereich der Führungssäulen 17 koaxial umgeben und jeweils zwischen einer auf der Führungssäule 17 angebrachten Muffe 20 und der Oberseite der Platte 18 verspannt sind, wird die Platte 18 so weit wie möglich nach unten gegen am Ende der Führungssäulen 17 getragene Anschläge gedrückt. Die Anordnung ist also so, daß die Platte 18 und damit die gesamte Düseneinheit 16 durch eine von unten wirkende Kraft gegen die Kraft der Federn 19 parallel zu sich oder auch mit einer gewissen Verkippung nach oben geschoben werden kann.

Die Platte 18 der Düseneinheit 16 trägt an ihrer Unterseite einen ersten Luftverteilerring 21, der einen in der Zeichnung nicht sichtbaren ringförmigen Hohlraum enthält. Von dem Luftverteilring 21 ragen mehrere Saugdüsen 22 achsparallel nach unten. Die Zahl der Saugdüsen 22 und deren geometrische Anordnung, insbesondere also deren Achsabstand sowie deren gegenseitige Winkelabstände, stimmen mit der Anordnung der Befestigungsbohrungen 23 in dem Aluminiumrad 2 überein. Die Saugdüsen 22 tragen an ihren Enden Düsenköpfe 24, die ihrerseits an ihren Enden so konisch abgeschrägt sind, daß sich die Saugdüsen 22 in den entsprechenden konischen Endbereichen der Befestigungsbohrungen 23 zentrieren können.

Die axial durch die Saugdüsen 22 verlaufenden, in der Zeichnung nicht sichtbaren Saugkanäle münden in den ringförmigen Hohlraum innerhalb des Luftverteilringes 21.

Die Platte 18 der Düseneinheit 16 trägt an ihrer Oberseite mehrere Schlauchanschlüsse 25, von denen in Figur 3 nur einer dargestellt ist und die mit dem ringförmigen Hohlraum im Luftverteilring 21 kommunizieren. Diese Schlauchanschlüsse 25 sind über Schläuche, die zur Entlastung der Figur 3 nicht eingezeichnet sind und die Tragplatte 14 in geeigneten Ausnehmungen durchsetzen, mit Schlauchanschlüssen 26 verbunden, die an der Unterseite des abnehmbaren Teiles 11a des Werkzeugwechselsystemes 11 angebracht sind und von denen nur einer in Figur 3 erkennbar ist.

An der Unterseite der Tragplatte 14 ist eine zylindrische Stange 31 festgelegt, welche koaxial zu der die Tragplatte 14 halternden Befestigungsstange 15 ausgerichtet ist. Die Stange 31 hält an ihrer Unterseite eine Ringdüse 27, deren Durchmesser dem Durchmesser der Nabenbohrung 28 des Aluminiumrades 2 entspricht. Der ringförmige Saugspalt der Ringdüse 27, der in Figur 3 nicht erkennbar ist, kommuniziert mit dem Innenraum eines zweiten, hohlen Luftverteilrings 29, der auf der Ringdüse 27 aufgeschraubt ist. Der Innenraum des Luftverteilringes 29 seinerseits steht mit radial angeordneten Schlauchanschlüssen 30 in Verbindung, die ihrerseits wiederum über nicht dargestellte Schläuche mit einem der Schlauchanschlüsse 26 am abnehmbaren Teil 11a des Werkzeugwechselsystems 11 verbunden sind.

Die Stange 31 durchsetzt den Luftverteilring 29 sowie eine Bohrung in der Tragplatte 18 und teilweise den unteren Luftverteilring 21. Am unteren Ende ist die Führungsstange 31 mit einer Aufnahme 32 versehen, welche in der in Figur 3 dargestellten Position des Absaugkopfes 12 in der Arbeitsposition am Aluminiumrad 2 die nach oben ragende Spitze eines Zentrierkegels 33 aufnimmt. Der Zentrierkegel 33 besitzt einen kolbenartig innerhalb einer achsparallelen Bohrung 34 des Spindelkopfes 5 geführten zylindrischen Bereich 33a sowie einen oberen kegelförmigen Bereich 33b, welcher durch eine Kreisbohrung 35 in der Oberseite des Spindelkopfes 5 hindurchgeführt ist.

Eine zwischen der Unterseite des Zentrierkegels 33 und dem Boden der Bohrung 34 im Spindelkopf 5 verspannte Feder 43 drückt den Zentrierkegel 33 normalerweise bis zur Anlage an der oberen Wand des Zylinderkopfes 5 nach oben.

Die Schlauchanschlüsse 26 am abnehmbaren Teil 11a des Werkzeugwechselsystemes 11 stehen in hier nicht dargestellter Weise mit der bereits oben erwähnten Kupplung für die Vakuumleitung in Verbindung, die in dem am Roboterarm 10 befestigten Teil 11b des Werkzeugwechselsystems 11 ein Gegenstück hat.

In demjenigen Bereich, in dem die Aluminiumräder 2 die Absaugvorrichtung 1 durchlaufen, also beginnend kurz vor derjenigen Erfassungstation 50, in der die Aluminiumräder 2 von der CCD-Kamera 7 erfasst werden, bis hinter diejenige Stelle, an der der Absaugvorgang abgeschlossen ist, verläuft entlang des Bewegungsweges der Aluminiumräder 2 parallel oberhalb zum Kettenförderer 4 eine Gleichlaufeinrichtung 36. Diese Gleichlaufeinrichtung 36 hat den Sinn, ein eventuelles Spiel, das die Spindeln 6 auf dem Kettenförderer 4 haben, zu eliminieren, so daß die Position der Aluminiumräder 2 sich zwischen derjenigen Stelle, an der sie von der CCD-Kamera 7 erfasst werden, und derjenigen Stelle, an der der Absaugvorgang erfolgt, nicht ändern kann.

Die Gleichlaufeinrichtung 36 umfasst, wie insbesondere der Figur 2 zu entnehmen ist, zwei Endlosbänder 37, 38, die jeweils ein geradliniges und parallel zur Bewegungsrichtung 3 verlaufendes inneres Trum 37a bzw. 38a und ein äußeres Trum 37b, 38b besitzen. Die Endlosbänder 37, 38 sind jeweils über zwei Umlenkrollen 39, 40 bzw. 41, 42 geführt, von denen jeweils eine angetrieben ist. Durch eine elektronische Verschaltung der Antriebsquelle des Kettenförderers 4 mit der Antriebsquelle der Endlosbänder 37, 38 nach Art von Master-and-Slave wird ein absoluter Gleichlauf der Endlosbänder 37, 38 zum Kettenförderer 4 erreicht. Die beiden inneren Trums, 37a, 38b der Endlosbänder 37, 38 liegen im oberen Bereich an den Spindeln 6 an und klemmen diese ein, so daß die Lage der Spindeln 6 in Förderrichtung 3 stets exakt definiert ist.

Die oben beschriebene Absaugvorrichtung 1 arbeitet wie folgt:

Mit Hilfe des Kettenförderers 4 werden die frisch mit Lackpulver überzogenen Aluminiumräder 2 herangeführt. Die Aluminiumräder 2 sind dabei auch an Flächenbereichen, an denen eine Lackbeschichtung nicht gewünscht ist, mit Lackpulver überzogen. Bei diesen Flächenbereichen handelt es sich insbesondere um die Begrenzungswand der Nabenbohrung 28 sowie die jeweils nach außen zeigenden, die Befestigungsbohrungen 23 umgebenden Ringflächen.

Bevor ein Aluminiumrad 2 in den Erfassungsbereich der CCD-Kamera 7 eintritt, läuft die zugehörige Spindel 6 zwischen die inneren Trums 37a, 38a der Gleichlaufeinrichtung 36 ein, so daß die Weiterbewegung nunmehr hoch definiert ist.

Beim Durchgang unterhalb der CCD-Kamera 7 stellt diese nicht nur den Typ des vorbeiwandernden Aluminiumrades 2 sondern auch dessen Achslage und die Winkellage der Befestigungsbohrungen 23 fest. Diese Daten werden einer Steuerung 51 zugeführt, die in Figur 2 schematisch dargestellt ist. Die Steuerung 51 gibt die fraglichen Daten an den Roboter 10 mit einer Zeitverzögerung weiter, die der Laufzeit der Aluminiumräder 2 zwischen der Erfassungsposition unterhalb der CCD-Kamera 7 und einer roboternahen Position entspricht.

Kommt das fragliche Aluminiumrad 2 an der letztgenannten Position an, weiß somit der Roboter 9, um welchen Radtyp es sich handelt und in welcher Position sich das Aluminiumrad 2 befindet. Er prüft zunächst, ob der Absaugkopf 12, der am Ende des Roboterarmes 10 befestigt ist, dem fraglichen Radtyp entspricht. Ist dies nicht der Fall, muß ein Wechsel des Absaugkopfes 12 eingeleitet werden, worauf weiter unten eingegangen wird. Stimmt der von der CCD-Kamera 7 ausgelesene Radtyp mit dem Absaugkopf 12 überein, so wird der Absaugkopf 12 mit Hilfe des Roboters 9 auf eine lineare Geschwindigkeit beschleunigt, die der Bewegungsgeschwindigkeit der Aluminiumräder 2 entspricht. Gleichzeitig wird die Achse des Absaugkopfes 12 entsprechend der ermittelten Achslage des Aluminiumrades 2 ausgerichtet und die Drehposition des Absaugkopfes 12 so verändert, daß die verschiedenen aus seiner Unterseite herausstehenden Saugdüsen 22 auf die Befestigungsbohrungen 23 des jeweiligen Aluminiumrades 2 ausgerichtet sind. Ist dies der Fall, wird der Absaugkopf 12 auf das Fahrzeugrad 2 abgesenkt. Dabei dringen die konisch zulaufenden Düsenköpfe 24 der Absaugdüsen 22 in die Befestigungsbohrungen 23 ein. Noch bevor jedoch ein Kontakt zwischen den Düsenköpfen 24 und den Flächen der Befestigungsbohrungen 22 erfolgt, wird die Umgebung der Befestigungsbohrungen 23 an der oberen Stirnseite des Fahrzeugrades 2 ringförmig mit Hilfe der Absaugdüsen 22 abgesaugt.

Etwa gleichzeitig dringt die Ringdüse 27 an der Unterseite des Absaugkopfes 12 in die Nabenbohrung 28 ein. Auch hier ist die Absaugung des Pulvers im wesentlichen schon abgeschlossen, wenn eine körperliche Berührung zwischen der Ringdüse 27 und der Wandung der Nabenbohrung 28 stattfindet.

Noch während des Absaugvorganges, also bevor die Düsenköpfe 24 an den Befestigungsbohrungen 23 und die Ringdüse 27 an der Nabenbohrung 28 anliegen, greift die Spitze des Zentrierkegels 33 in die Aufnahme 32 der Führungsstange 31 am Absaugkopf 12 ein. Bei der weiter in Richtung auf das Aluminiumrad 2 verlaufenden Bewegung des Absaugkopfes 12 wird nunmehr der Zentrierkegel 33 gegen die Wirkung der Feder 43 nach unten gedrückt. Hierdurch eröffnet sich zwischen der Bohrung 35 in der Oberseite des Spindelkopfes 5 und dem kegeligen Bereich 33b des Zentrierkegels 33 ein Ringspalt, durch den Luft von unten, also aus der Bohrung 34 des Spindelkopfes 5, nach oben durchtreten kann, welche dann die Nabenbohrung 28 durchsetzt. Durch diese strömende Luft wird das Freisaugen der Nabenbohrung 28 unterstützt.

Ist der Absaugvorgang, bei welchem der Absaugkopf 12, durch den Roboterarm 10 geführt, ständig der kontinuierlichen, gleichmäßigen Bewegung der Aluminiumräder 2 folgt, abgeschlossen, wird der Absaugkopf 12 durch den Roboter 9 von dem Aluminiumrad 2 abgenommen. Das Aluminiumrad 2 verlässt nunmehr den Wirkungsbereich der Gleichlaufeinrichtung 36 und wird zu einem anderen Anlageteil, beispielsweise zu einem Brennofen, weitergeleitet.

Durch die federnde Lagerung der Düseneinheit 16 gegenüber dem Düsenkopf 12 können Beschädigungen des Aluminiumrades 2 und/oder des Absaugkopfes 12 vermieden werden, wenn die Düsenköpfe 24 oder die Ringdüse 27 in Anlage an die Wände der Befestigungsbohrungen 23 bzw. der Nabenbohrung 28 des Aluminiumrades 2 gelangen. Entlang des Bewegungsweges der Düseneinheit 16 ist ein nicht dargestellter Sensor angeordnet. Stellt dieser fest, daß die Düseneinheit 16 um eine Strecke nach oben gedrückt wurde, der einen vorgegebenen Maximalwert übersteigt, hebt der Roboter 9 unter einem Kommando der Steuerung 51 den Absaugkopf 12 von dem Aluminiumrad 2 ab; in diesem Falle wird ein Alarmsignal erzeugt.

Wie Figur 2 zeigt, sind im Erfassungsbereich des Roboterarmes 10 mehrere Ablagestellen 44 bis 46 vorgesehen, an denen für unterschiedliche Radtypen geeignete Absaugköpfe 12 abgestellt werden können. Stellt die CCD-Kamera 7 fest, daß das unter ihr vorbeiwandernde Aluminiumrad 2 zu einem anderen Typ gehört als der Absaugkopf 12, der gerade am Ende des Roboterarmes 10 befestigt ist, so erhält der Roboter 9 von der Steuerung den Befehl, den an ihm montierten Absaugkopf 12 an der diesem zugeordneten Abstellposition 44, 45, 46 zu deponieren und den für den neu ankommenden Radtyp geeigneten Absaugkopf 12 von der entsprechenden Abstellposition 44, 45, 46 abzunehmen. Der Roboter 9 fährt dann den neu aufgenommenen Absaugkopf 12 wieder in die Arbeitsposition an dem Bewegungsweg der Aluminiumräder 2 zurück. Da das Absetzen des nicht mehr benötigten und das Aufnehmen des neuen Absaugkopfes 12 eine gewisse Zeit benötigt, muß in diesem Falle zwischen dem letzten Aluminiumrad 2, das mit dem ersten Absaugkopf 12 abgesaugt wurde, und dem ersten Aluminiumrad 2 neuen Typs, das mit dem zweiten Absaugkopf 12 abgesaugt werden soll, ein Mindestabstand bestehen.

Der Mindestabstand zwischen den aufeinanderfolgenden Aluminiumrädern 2 unterschiedlichen Typs muß also bei vorgegebener Bewegungsgeschwindigkeit der Aluminiumräder 2 derjenigen Zeit entsprechen, die zum Wechsel des Absaugkopfes 12 benötigt wird.

## Patentansprüche

1. Vorrichtung zum Absaugen bestimmter Flächenbereiche an bepulverten Fahrzeugrädern mit:
a) einem Fördersystem (4), welches die Fahrzeugräder entlang eines Bewegungsweges durch die Vorrichtung (1) führt; und mit
b) einer elektronische Kamera (7), mit deren Hilfe in einer Erfassungsstation (50) die Achs- und Winkellage der Fahrzeugräder (2) erfassbar ist;
**dadurch gekennzeichnet, daß** sie umfasst:
c) eine Absaugstation (8) mit einem beweglichen Absaugkopf (12), der eine Mehrzahl von Saugdüsen (22, 27) umfasst;
d) eine Bewegungseinrichtung (9), welche in der Lage ist, den Absaugkopf (12) in unterschiedlichen Achsorientierungen und in unterschiedlichen Winkelstellungen um seine Achse an die bepulverte Fläche eines in der Absaugstation (8) befindlichen Fahrzeugrades (2) heranzuführen und in dieser Lage mit der Geschwindigkeit des Fahrzeugrades (2) eine gewisse Strecke zu führen;
e) eine Unterdruckquelle (52), welche mit den Saugdüsen (22, 27) verbunden ist;
f) eine Steuerung (51), welche die in der Erfassungs-station (50) für die Achs- und Winkelstellung eines bestimmten Fahrzeugrades (2) ermittelten Daten mit einer Zeitverzögerung, die der Durchlaufzeit des Fahrzeugrades (2) zwischen der Erfassungsstation (50) und der Absaugstation (8) entspricht, an die Bewegungseinrichtung (9) des Absaugkopfes (12) weiterleitet und diese veranlasst, den Absaugkopf (12) unter entsprechender Ausrichtung seiner Achse und seiner Winkellage an das Fahrzeugrad (2) heranzuführen und sich mit diesem über eine gewisse Strecke zu bewegen.

2. Vorrichtung nach Anspruch 1, **dadurch gekennzeichnet, daß** die Bewegungseinrichtung (9) ein Roboter mit entsprechender Achszahl ist und der Absaugkopf (12) am Ende des Roboterarms (10) befestigt ist.

3. Vorrichtung nach einem der vorhergehenden Ansprüche, **dadurch gekennzeichnet, daß** sie eine Mehrzahl von austauschbaren Absaugköpfen (12), die jeweils unterschiedlichen Typen von Fahrzeugrädern (2) zugeordnet sind, umfasst.

4. Vorrichtung nach Anspruch 3, **dadurch gekennzeichnet, daß** die elektronische Kamera (7) zusätzlich in der Lage ist, den Typ des von ihr erfaßten Fahrzeugrades zu erkennen.

5. Vorrichtung nach Anspruch 3 oder 4, **dadurch gekennzeichnet, daß** die Absaugköpfe (12) über ein Werkzeugwechselsystem (11) an dem Roboterarm (10) befestigbar sind.

6. Vorrichtung nach Anspruch 5, **dadurch gekennzeichnet, daß** für jeden Absaugkopf (12) eine Abstellfläche (44, 45, 46) vorgesehen ist, die im Erfassungsbereich des Roboterarms (10) liegt.

7. Vorrichtung nach einem der vorhergehenden Ansprüche, **dadurch gekennzeichnet, daß** die Fördereinrichtung (4) einen Kettenförderer umfasst.

8. Vorrichtung nach einem der vorhergehenden Ansprüche, **dadurch gekennzeichnet, daß** die Fahrzeugräder (2) auf Spindeln (6) auflegbar sind, die an der Fördereinrichtung (4) befestigt und um ihre eigene Achse drehbar sind.

9. Vorrichtung nach einem der vorhergehenden Ansprüche, **dadurch gekennzeichnet, daß** neben der Fördereinrichtung (4) eine Gleichlaufeinrichtung (36) an der Wegstrecke zwischen der Erfassungsstation (50) und der Absaugstation (8) vorgesehen ist, welche ein eventuelles Spiel der Fördereinrichtung (4) aufnimmt und für eine exakt definierte Geschwindigkeit der Fahrzeugräder (2) sorgt.

10. Vorrichtung nach Anspruch 9 bei Rückbeziehung auf Anspruch 8, **dadurch gekennzeichnet, daß** die Gleichlaufeinrichtung (36) zwei Endlosbänder (37, 38) umfasst, deren Trums (37a, 37b, 38a, 38b) sich parallel zum Bewegungsweg der Fahrzeugräder (2) erstrecken, wobei die Spindeln (6) zwischen den .inneren Trums (37a, 37b) eingeklemmt sind.

11. Vorrichtung nach einem der vorhergehenden Ansprüche, **dadurch gekennzeichnet, daß** die Saugdüsen (22, 27) an einer Düseneinheit (16) ausgebildet sind, welche innerhalb des Absaugkopfes (12) bewegbar angeordnet ist und von einer Federeinrichtung (19) in eine Position gedrückt wird, in welcher die Saugdüsen (22, 27) maximal über den Absaugkopf (12) vorstehen.

12. Vorrichtung nach Anspruch 11, **dadurch gekennzeichnet, daß** ein Sensor vorgesehen ist, welcher ein Alarmsignal an die Steuerung (51) abgibt, wenn die Düseneinheit (16) weiter als eine vorgegebene Strecke gegen die Kraft der Federeinrichtung (19) bewegt wird.

13. Vorrichtung nach einem der vorhergehenden Ansprüche, **dadurch gekennzeichnet, daß** der Absaugkopf (12) eine Mehrzahl von Absaugdüsen (22) aufweist, die in gleichem radialen Abstand von der Achse des Absaugkopfes (12) angeordnet sind und der Absaugung der die Mündungen der Befestigungsbohrungen (23) des Fahrzeugrades (2) umgebenden Ringflächen dienen.

14. Vorrichtung nach einem der vorhergehenden Ansprüche, **dadurch gekennzeichnet, daß** der Absaugkopf (12) eine zu seiner Achse koaxiale Ringdüse (27) aufweist, welche der Absaugung der Flächen der Nabenbohrung (28) des Fahrzeugrades (2) dient.

15. Vorrichtung nach einem der vorhergehenden Ansprüche, **dadurch gekennzeichnet, daß** die Unterdruckquelle (52) ein Industriestaubsauger ist.

16. Vorrichtung nach Anspruch 8, **dadurch gekennzeichnet, daß** die Spindeln (6) jeweils einen Spindelkopf (5) mit einem Zentrierkegel (33) aufweisen, wobei der Zentrierkegel (33) einen in einer Bohrung (34) des Spiadelkopfes (5) verschiebbar geführten und von einer Federeinrichtung (43) beaufschlagten kolbenartigen Abschnitt (33a) und einen durch eine Bohrung (35) an der Oberseite des Spindelkopfes (5) hindurchgeführten, überstehenden kegeligen Abschnitt (33b) aufweist, der bei der Annäherung des Absaugkopfes (12) an das Fahrzeugrad (2) mit einem Teil (32) des Absaugkopfes (12) in Berührung gelangt, wodurch der Zentrierkegel (33) in der Bohrung (34) des Spindelkopfes (5) gegen die Kraft der Federeinrichtung (43) zurückgeschoben und ein Spalt zwischen dem kegeligen Abschnitt (33b) des Zentrierkegels (33) und der Bohrung (35) in der Oberseite des Spindelkopfes (5) freigegeben wird.

## Claims

1. Device for sucking off specified surface areas on powder-coated vehicle wheels, comprising
a) a conveyor system (4), which carries the vehicle wheels along a movement path through the device (1); and
b) an electronic camera (7), using which the axial and angular position of the vehicle wheels (2) can be recorded in a recording station (50);
**characterized in that** it includes:
c) a suction station (8) with a movable suction head (12), which includes multiple suction nozzles (22, 27);
d) a movement device (9), which is capable of guiding the suction head (12) in various axial orientations and angular positions around its axis onto the powder-coated surface of a vehicle wheel (2) in the suction station (8), and of moving it a certain distance in this position at the speed of the vehicle wheel (2);
e) a vacuum source (52), which is connected to the suction nozzles (22, 27);
f) a controller (51), which passes on the data which is determined in the recording station (50) for the axial and angular position of a particular vehicle wheel (2) to the movement device (9) of the suction head (12), with a time delay corresponding to the pass time of the vehicle wheel (2) between the recording station (50) and the suction station (8), and causes the movement device (9) to guide the suction head (12) onto the vehicle wheel (2) with appropriate alignment of its axis and angular position, and to move with it over a certain distance.

2. Device according to Claim 1, **characterized in that** the movement device (9) is a robot with a corresponding number of axes, and the suction head (12) is fixed to the end of the robot arm (10).

3. Device according to one of the preceding claims, **characterized in that** it includes a number of replaceable suction heads (12) which are each assigned to different types of vehicle wheels (2).

4. Device according to Claim 3, **characterized in that** the electronic camera (7) is also capable of recognising the type of vehicle wheel which it records.

5. Device according to Claim 3 or 4, **characterized in that** the suction heads (12) can be fixed to the robot arm (10) via a tool exchange system (11).

6. Device according to Claim 5, **characterized in that** for each suction head (12), a deposit area (44, 45, 46) is provided within reach of the robot arm (10).

7. Device according to one of the preceding claims, **characterized in that** the conveyor device (4) includes a chain conveyor.

8. Device according to one of the preceding claims, **characterized in that** the vehicle wheels (2) can be placed on spindles (6), which are fixed to the conveyor device (4) and can be rotated around their own axis.

9. Device according to one of the preceding claims, **characterized in that** as well as the conveyor device (4) a synchronisation device (36) is provided on the route section between the recording station (50) and the suction station (8), and absorbs any play in the conveyor device (4) and ensures a precisely defined speed of the vehicle wheels (2).

10. Device according to Claim 9 referring back to Claim 8, **characterized in that** the synchronisation device (36) includes two endless loops (37, 38), the strands (37a, 37b, 38a, 38b) of which extend parallel to the movement path of the vehicle wheels (2), the spindles (6) being clamped between the inner strands (37a, 37b).

11. Device according to one of the preceding claims, **characterized in that** the suction nozzles (22, 27) are implemented on a nozzle unit (16) which is arranged so that it can be moved within the suction head (12) and is pressed by a spring device (19) into a position in which the suction nozzles (22, 27) project above the suction head (12) to the maximum extent.

12. Device according to Claim 11, **characterised in that** a sensor, which outputs an alarm signal to the controller (51) if the nozzle unit (16) is moved further than a predefined distance against the force of the spring device (19), is provided.

13. Device according to one of the preceding claims, **characterized in that** the suction head (12) has multiple suction nozzles (22), which are arranged at the same radial distance from the axis of the suction head (12) and are used to suck off the ring surfaces which surround the openings of the fixing holes (23) of the vehicle wheel (2).

14. Device according to one of the preceding claims, **characterized in that** the suction head (12) has a ring nozzle (27) which is coaxial to its axis, and is used to suck off the surfaces of the hub hole (28) of the vehicle wheel (2).

15. Device according to one of the preceding claims, **characterized in that** the vacuum source (52) is an industrial vacuum cleaner.

16. Device according to Claim 8, **characterized in that** the spindles (6) each have a spindle head (5) with a centring cone (33), the centring cone (33) having a piston-like section (33a) which is guided movably in a hole (34) of the spindle head (5) and affected by a spring device (43), and a projecting conical section (33b) which is guided through a hole (35) on the upper side of the spindle head (5), which conical section, as the suction head (12) approaches the vehicle wheel (2), comes into contact with part (32) of the suction head (12), so that the centring cone (33) is pushed back in the hole (34) of the spindle head (5) against the force of the spring device (43), and a gap is freed between the conical section (33b) of the centring cone (33) and the hole (35) in the upper side of the spindle head (5).

## Revendications

1. Dispositif de traitement, par aspiration, de régions superficielles déterminées de roues de véhicules laquées à la poudre, comprenant :
a) un système de convoyage (4) qui guide lesdites roues de véhicules à travers ledit dispositif (1), le long d'un trajet de mouvement ; et
b) une caméra électronique (7) à l'aide de laquelle les positions axiales et angulaires desdites roues (2) de véhicules peuvent être détectées dans un poste de détection (50) ; **caractérisé par le fait qu'**il comprend :
c) un poste (8) d'évacuation par aspiration, présentant une tête mobile d'aspiration (12) munie d'une pluralité de buses d'aspiration (22, 27) ;
d) un mécanisme (9) de mise en mouvement, apte à rapprocher, de la surface laquée à la poudre d'une roue (2) de véhicule située dans le poste (8) d'évacuation par aspiration, la tête d'aspiration (12) dans différentes orientations axiales et dans différentes positions angulaires autour de son axe ; et à la guider selon un certain trajet, dans cette position, à la vitesse de ladite roue (2) de véhicule ;
e) une source de dépression (52) reliée aux buses d'aspiration (22, 27) ;
f) une commande (51) qui transmet au mécanisme (9) de mise en mouvement de la tête d'aspiration (12), avec une temporisation correspondant au temps de passage de la roue (2) de véhicule entre le poste de détection (50) et le poste (8) d'évacuation par aspiration, les données établies dans ledit poste de détection (50) et relatives aux positions axiale et angulaire d'une roue (2) de véhicule déterminée ; et qui incite ledit mécanisme à rapprocher ladite tête d'aspiration (12) de ladite roue (2) de véhicule, avec orientation correspondante de son axe et de sa position angulaire, et à se déplacer d'un certain trajet conjointement à ladite roue.

2. Dispositif selon la revendication 1, **caractérisé par le fait que** le mécanisme (9) de mise en mouvement est un robot doté d'un nombre d'axes correspondant, la tête d'aspiration (12) étant fixée à l'extrémité du bras (10) dudit robot.

3. Dispositif selon l'une des revendications précédentes, **caractérisé par le fait qu'**il englobe une pluralité de têtes d'aspiration (12) interchangeables, respectivement affectées à différents types de roues (2) de véhicules.

4. Dispositif selon la revendication 3, **caractérisé par le fait que** la caméra électronique (7) est additionnellement apte à identifier le type de la roue de véhicule qu'elle a détectée.

5. Dispositif selon la revendication 3 ou 4, **caractérisé par le fait que** les têtes d'aspiration (12) peuvent être fixées au bras (10) du robot par l'intermédiaire d'un système (11) de remplacement d'outillage.

6. Dispositif selon la revendication 5, **caractérisé par le fait qu'**un reposoir (44, 45, 46), situé dans la zone de détection du bras (10) du robot, est prévu pour chaque tête d'aspiration (12).

7. Dispositif selon l'une des revendications précédentes, **caractérisé par le fait que** le système de convoyage (4) comprend un convoyeur à chaîne.

8. Dispositif selon l'une des revendications précédentes, **caractérisé par le fait que** les roues (2) de véhicules peuvent être déposées sur des broches (10) fixées au système de convoyage (4), et pouvant tourner autour de leur axe propre.

9. Dispositif selon l'une des revendications précédentes, **caractérisé par le fait qu'**un système de synchronisation (36) prévu à côté du système de convoyage (4), sur le trajet de cheminement entre le poste de détection (50) et le poste (8) d'évacuation par aspiration, absorbe un éventuel jeu dudit système de convoyage (4) et assure une vitesse des roues (2) de véhicules bien définie de manière précise.

10. Dispositif selon la revendication 9 rattachée à la revendication 8, **caractérisé par le fait que** le système de synchronisation (36) comprend deux bandes sans fin (37, 38) dont les brins (37a, 37b, 38a, 38b) s'étendent parallèlement au trajet de mouvement des roues (2) de véhicules, les broches (6) étant coincées entre les brins intérieurs (37a, 37b).

11. Dispositif selon l'une des revendications précédentes, **caractérisé par le fait que** les buses d'aspiration (22, 27) sont ménagées sur une unité pulvérisatrice (16) qui est logée, avec mobilité, à l'intérieur de la tête d'aspiration (12) et est poussée, par un système élastique (19), vers un emplacement auquel lesdites buses d'aspiration (22, 27) sont en saillie maximale au-delà de ladite tête d'aspiration (12).

12. Dispositif selon la revendication 11, **caractérisé par** la présence d'un capteur qui délivre un signal d'alarme, à la commande (51), lorsque l'unité pulvérisatrice (16) est animée, en opposition à la force du système élastique (19), d'un mouvement excédant une course préétablie.

13. Dispositif selon l'une des revendications précédentes, **caractérisé par le fait que** la tête d'aspiration (12) comprend une pluralité de buses d'aspiration (22) qui sont agencées à une distance radiale identique par rapport à l'axe de ladite tête d'aspiration (12) et servent à traiter, par aspiration, les surfaces annulaires entourant les embouchures des perçages de fixation (23) de la roue (2) de véhicule.

14. Dispositif selon l'une des revendications précédentes, **caractérisé par le fait que** la tête d'aspiration (12) présente une buse annulaire (27) coïncidant avec son axe et servant à traiter, par aspiration, les surfaces du perçage (28) du moyeu de la roue (2) de véhicule.

15. Dispositif selon l'une des revendications précédentes, **caractérisé par le fait que** la source de dépression (52) est un aspirateur industriel.

16. Dispositif selon la revendication 8, **caractérisé par le fait que** les broches (6) sont respectivement pourvues d'une tête (5) à cône de centrage (33), ledit cône de centrage (33) comprenant un tronçon (33a) du type piston, sollicité par un système élastique (43) et guidé à coulissement dans un perçage (34) de la tête (5) de broche ; et un tronçon conique saillant (33b) qui est engagé à travers un perçage (35) pratiqué à la face supérieure de ladite tête (5) de broche et qui, lorsque la tête d'aspiration (12) se rapproche de la roue (2) de véhicule, entre en contact avec une partie (32) de ladite tête d'aspiration (12), ce qui a pour effets de rétracter le cône de centrage (33) dans le perçage (34) de la tête (5) de broche, en opposition à la force du système élastique (43), et de réserver un interstice entre le tronçon conique (33b) dudit cône de centrage (33), et le perçage (35) pratiqué dans la face supérieure de ladite tête (5) de broche.
